(19) **Europäisches Patentamt**
**European Patent Office**
**Office européen des brevets**

(11) **EP 4 528 673 B1**

(12) **EUROPEAN PATENT SPECIFICATION**

(45) Date of publication and mention
of the grant of the patent:
**04.03.2026 Bulletin 2026/10**

(21) Application number: **24187570.7**

(22) Date of filing: **10.07.2024**

(51) International Patent Classification (IPC):
***G06V 10/82*** *(2022.01)* ***G06V 30/146*** *(2022.01)*

(52) Cooperative Patent Classification (CPC):
**G06V 10/82; G06V 30/1468**

(54) **METHOD AND APPARATUS FOR DETECTING AVPS MARKER**

VERFAHREN UND VORRICHTUNG ZUR ERKENNUNG EINES AVPS-MARKERS

PROCÉDÉ ET APPAREIL DE DÉTECTION DE MARQUEUR AVPS

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **25.09.2023 KR 20230127919**

(43) Date of publication of application:
**26.03.2025 Bulletin 2025/13**

(73) Proprietor: **Hyundai Mobis Co., Ltd.
Gangnam-gu
Seoul 06141 (KR)**

(72) Inventors:
• **JIN, Moon Yong**
**16891 Yongin-si (KR)**
• **CHOI, Jun Ho**
**16099 Uiwang-si (KR)**
• **KIM, Ki Chan**
**16683 Suwon-si (KR)**

(74) Representative: **Vossius & Partner
Patentanwälte Rechtsanwälte mbB
Siebertstrasse 3
81675 München (DE)**

(56) References cited:
• **WEITONG WAN ET AL: "Two-dimensional
barcode positioning algorithm of lightweight
CenterNet network", JOURNAL OF ELECTRONIC
MEASUREMENT AND INSTRUMENTATION, 1
May 2022 (2022-05-01), pages 1 - 8, XP093235178,
Retrieved from the Internet <URL:http://jemi.
cnjournals.com/jemien/article/pdf/20220515>
[retrieved on 20241217], DOI: 10.13382/
j.jemi.B2104821**
• **XINGYI ZHOU ET AL: "Objects as Points",
ARXIV.ORG, CORNELL UNIVERSITY LIBRARY,
201 OLIN LIBRARY CORNELL UNIVERSITY
ITHACA, NY 14853, 16 April 2019 (2019-04-16),
XP081170201**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**CROSS-REFERENCE TO RELATED APPLICATOINS**

This application claims the benefit of Korean Patent Application Number 10-2023-0127919, filed on September 25, 2023.

**TECHNICAL FIELD**

The present invention relates to a method and an apparatus for detecting an AVPS marker. More specifically, the present invention relates to a technology for accurately detecting a bounding box and corner points of a marker in an image.

**BACKGROUND**

The contents described below simply provide background information related to the present disclosure and do not constitute prior art.

An automated valet parking system (AVPS) is being developed for parking convenience. The AVPS automatically operates a vehicle so that the vehicle moves to an empty parking space and parks when a driver gets off at a drop-off area in a parking facility. Further, the AVPS automatically moves a parked vehicle to a pick-up area upon the driver's request, allowing the driver to board the vehicle.

For safe and reliable AVPS, level 4 or higher autonomous driving is required. The AVPS must not only recognize other objects to prevent collisions, but also determine an empty parking space and a traveling route and automatically move, park, and exit vehicles. To this end, a localization technology for estimating a current position of a subject vehicle is important.

The AVPS adopts vision-based localization using a high definition map and cameras as a localization technology. The AVPS uses a coded marker specified in ISO 23374 for localization. The coded marker is a type of fiducial marker, and may be installed in a parking facility and recognized by a vehicle. The fiducial marker is an artificial marker, an object placed in the field of view of an imaging system that appears in the image produced, for use as a point of reference or a measure. The high definition map may include information on the identification (ID), position, orientation, and the like of coded markers installed in a parking facility. The accuracy of coded marker recognition affects vehicle localization performance in the AVPS.

Related arts regarding fiducial marker detection include methods for detecting ArUco markers using a general image processing techniques or deep learning. However, the related arts have problems that small markers may not be detected, markers may be incorrectly detected, or a marker recognition rate may be very low for highly distorted images.

Weitong Wan ET AL: "Two-dimensional barcode positioning algorithm of lightweight CenterNet network", JOURNAL OF ELECTRONIC MEASUREMENT AND INSTRUMENTATION, 1 May 2022 (2022-05-1), pages 1-8, XP093235178, DOI: 10.13382/j.jemi.B2104821 is directed to a two-dimensional bar code positioning algorithm based on lightweight CenterNet network and a lightweight Center detection algorithm.

Further related technology is disclosed in XINGYI ZHOU ET AL: "Objects as Points", ARXIV.ORG, CORNELL UNIVERSITY LIBRARY, 201 OLIN LIBRARY CORNELL UNIVERSITY ITHACA, NY 14853, 16 April 2019 (2019-04-16), XP081170201.

**SUMMARY**

The present invention is specified by the independent claims. Preferred embodiments are defined by the dependent claims. Embodiments of the present disclosure provide a method and an apparatus for detecting an AVPS marker in an image.

Embodiments of the present disclosure provide a method for accurately detecting a bounding box and corner points of a marker in an image.

The embodiments of the present disclosure are not limited to the aforementioned embodiments, and other embodiments not mentioned above will be clearly understood by a person having ordinary skill in the art through the following description.

A method of detecting a coded marker, including receiving an image and preprocessing the image, extracting a feature map of the image through a backbone network, extracting a center point heatmap for a coded marker, a first feature map for a width and height of a bounding box, a second feature map for offsets for adjusting the center point, and a third feature map for corner points of the coded marker from the feature map using a plurality of head networks, generating candidate detection information including the bounding box and the corner points on the basis of the center point heatmap, the first feature map, the second feature map, and the third feature map, and outputting final detection information by performing modified non-maximum suppression on the candidate detection information.

An apparatus comprising one or more processors and a memory operably connected to the one or more processors, wherein the memory stores instructions causing the one or more processors to perform operations in response to execution of instructions by the one or more processors, and the operations include receiving an image and preprocessing the image, extracting a feature map of the image through a backbone network, extracting a center point heatmap for a coded marker, a first feature map for a width and height of a bounding box, a second feature map for offsets for adjusting the center point, and a third feature map for corner points of the coded marker from the feature map using a plurality of head networks, generating candidate detection information including the bounding box and the corner points on the basis of the center point heatmap, the first feature map, the second feature map, and the third feature map, and outputting final detection information by performing modified non-maximum suppression on the candidate detection information.

According to an embodiment of the present disclosure, it is possible to improve vehicle localization performance in an AVPS by accurately detecting the bounding box and corner points of the marker in the image.

The effects of embodiments of the present disclosure are not limited to the effects mentioned above, and other effects not mentioned will be clearly understood by those skilled in the art from the descriptions below.

**BRIEF DESCRIPTION OF THE DRAWINGS**

FIG. 1 is a configuration diagram of a vehicle localization system using an AVPS marker according to an embodiment of the present disclosure.
FIG. 2 is a schematic diagram of the coded marker.
FIG. 3 is an exemplary diagram illustrating a coded marker installed in a parking facility.
FIG. 4 is an exemplary diagram illustrating a bounding box and corner points of a coded marker detected in an image according to an embodiment of the present disclosure.
FIG. 5 is a flowchart of a method of detecting an AVPS marker according to an embodiment of the present disclosure.
FIG. 6 is an exemplary diagram illustrating resizing in image pre-processing according to an embodiment of the present disclosure.
FIG. 7 is a diagram illustrating a structure of a deep learning network for detecting an AVPS marker according to an embodiment of the present disclosure.
FIG. 8 is a diagram illustrating a process of extracting information on a preset number of center points from a center point heatmap according to an embodiment of the present disclosure.
FIG. 9 is a diagram illustrating a process of extracting a width and height of a bounding box, an offset, and corner point information of a coded marker on the basis of extracted center point information according to an embodiment of the present disclosure.
FIG. 10 is a diagram illustrating a process of performing modified non-maximum suppression on candidate detection information according to an embodiment of the present disclosure.

**DETAILED DESCRIPTION**

Hereinafter, some embodiments of the present disclosure will be described in detail with reference to the accompanying illustrative drawings. In the following description, like reference numerals preferably designate like elements, although the elements are shown in different drawings. Further, in the following description of some embodiments, a detailed description of related known components and functions when considered to obscure the subject matter of embodiments of the present disclosure will be omitted for the purpose of clarity and for brevity.

Various ordinal numbers or alpha codes such as first, second, i), ii), a), b), etc. are prefixed solely to differentiate one component from the other but not to imply or suggest the substances, order, or sequence of the components. Throughout this specification, when a part "includes" or "comprises" a component, the part is meant to further include other components, not to exclude thereof unless specifically stated to the contrary. The terms such as "unit," "module," and the like refer to one or more units for processing at least one function or operation, which may be implemented by hardware, software, or a combination thereof.

The description of embodiments of the present disclosure to be presented below in conjunction with the accompanying drawings is intended to describe exemplary embodiments of the present disclosure and is not intended to represent the only embodiments in which the technical idea of the present disclosure may be practiced.

In the present specification, the term 'AVPS marker' may be used interchangeably with the term 'coded marker', and may be briefly referred to as the term 'marker'.

A vehicle localization system using an AVPS marker according to an embodiment of the present disclosure (hereinafter referred to as 'vehicle localization system') will first be described.

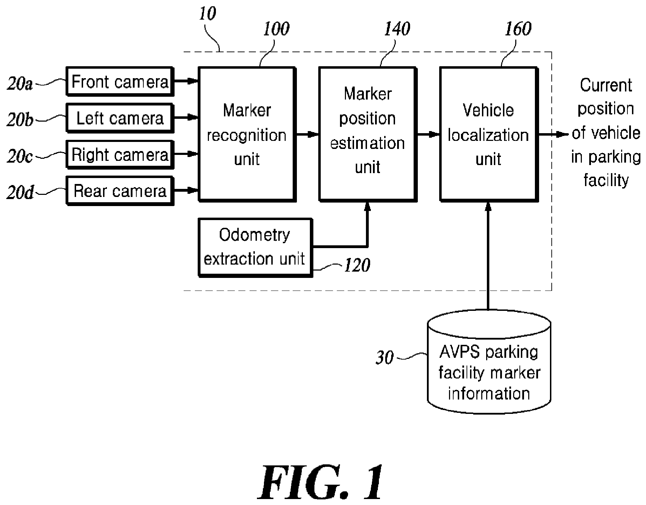

Referring to FIG. 1, a vehicle localization system 10 according to an embodiment of the present disclosure obtains a current position of a vehicle. The vehicle localization system 10 may recognize a coded marker in an image, estimate a position of the coded marker using a coded marker recognition result and odometry information of the vehicle, and then perform map matching based on the estimated coded marker position and AVPS parking facility marker information 30 to obtain the current position of the vehicle. To this end, the vehicle localization system 10 includes all or some of a marker recognition unit 100, an odometry extraction unit 120, a marker position estimation unit 140, and a vehicle localization unit 160.

The marker recognition unit 100 recognizes coded markers in the parking facility based on images obtained by capturing the front, left, right, and rear sides of the vehicle using a plurality of cameras 20a, 20b, 20c, and 20d. The marker recognition unit 100 outputs the coded marker recognition result including an ID, bounding box, and corner points of the coded marker in the image.

To this end, the marker recognition unit 100 may perform marker detection, marker classification, and marker tracking. The marker detection is a process of simultaneously detecting the bounding box and the corner points of objects belonging to the class corresponding to the coded marker within each input image frame, and a deep learning network trained through multi-task learning may be used, but the present disclosure is not limited thereto. The marker classification is a process of extracting a region of interest (ROI) corresponding to the coded marker in each image frame using the detection results, and identifying the coded marker ID by performing decoding on the ROI. The marker tracking is a process of tracking change in the position of the coded marker within a series of image frames, and coded marker tracking may be performed by additionally utilizing the identified coded marker ID information.

The odometry extraction unit 120 periodically calculates longitudinal and lateral movement distances of the vehicle over time through wheel odometry and stores the longitudinal and lateral movement distances in a buffer. The wheel odometry refers to estimating change in position of a vehicle over time using vehicle specification information and vehicle sensor information. The vehicle specification information may include wheel base, the number of wheel teeth, wheel size, and the like. The vehicle sensor information may include a wheel speed signal, a wheel pulse signal, and a steering angle signal, and the like received through a chassis controller area network (CAN).

The marker position estimation unit 140 estimates a position and orientation of the coded marker based on a center of the vehicle (hereinafter referred to as 'vehicle-based coded marker position'). Here, "vehicle-based" means indicating a relative position and orientation of the coded marker with the center of the vehicle as a reference point. First, camera-based coded marker position and orientation may be obtained using the coded marker recognition result, an actual size of the coded marker, and internal/external parameters of the camera. Here, "camera-based" means indicating a relative position and orientation of the coded marker with the camera as a reference point. Then, the vehicle-based coded marker position may be estimated by moving a reference point of the camera-based coded marker position and direction to the center of the vehicle using the vehicle specifications and installation location of the cameras.

Meanwhile, a latency occurs from a time t1 at which the marker recognition unit 100 receives an image to a time t2 at which the marker recognition unit 100 outputs the coded marker recognition result. When the latency is longer, the accuracy of vehicle-based coded marker position estimation based on the coded marker recognition result may be degraded due to a movement of the vehicle. Therefore, the marker position estimation unit 140 may obtain the longitudinal and lateral movement distances of the vehicle between the time t1 and the time t2 by using buffer data stored by the odometry extraction unit 120, and correct the estimation results of the vehicle-based coded marker position by using the obtained movement distances.

The vehicle localization unit 160 obtains the current position of the vehicle in the parking facility on the basis of coded marker recognition information (the ID of the coded marker and information on the vehicle-based coded marker position) and the AVPS parking facility marker information 30. The vehicle localization unit 160 may find the same marker ID as the ID of the recognized coded marker from the AVPS parking facility marker information 30, and use the vehicle-based coded marker position to obtain the current position of the vehicle in the parking facility.

For example, it is assumed that a marker with ID 45 is installed at a position 100 m in the longitudinal direction and 50 m in the lateral direction with reference to an entrance point of a parking facility. When the ID of the recognized coded marker is 45 and the vehicle-based coded marker position is estimated to be 3 m in the longitudinal direction and -1 m in the lateral direction, it can be seen that the vehicle is located at (103, 49) in the parking facility on the basis of an absolute position (100, 50) of the marker in the parking facility and the vehicle-based coded marker position (3, -1) by searching for the marker corresponding to ID 45 in the AVPS parking facility marker information 30.

The AVPS parking facility marker information 30 includes information on an ID, position, orientation, size, and the like of each of a plurality of coded markers installed in the parking facility. The AVPS parking facility marker information 30 may be included in a high definition map transmitted from a parking facility control center when the vehicle enters the parking facility. Here, the parking facility control center may be an R subsystem specified in ISO 23374, but is not limited thereto.

The present disclosure relates to a method and device of detecting an AVPS marker performed by the marker recognition unit 100. While conventional marker detection methods output only bounding box information, the present disclosure provides a method for simultaneously detecting not only bounding box information of the marker but also corner point information of the marker using a deep learning network trained through multi-task learning.

The AVPS marker will be described first.

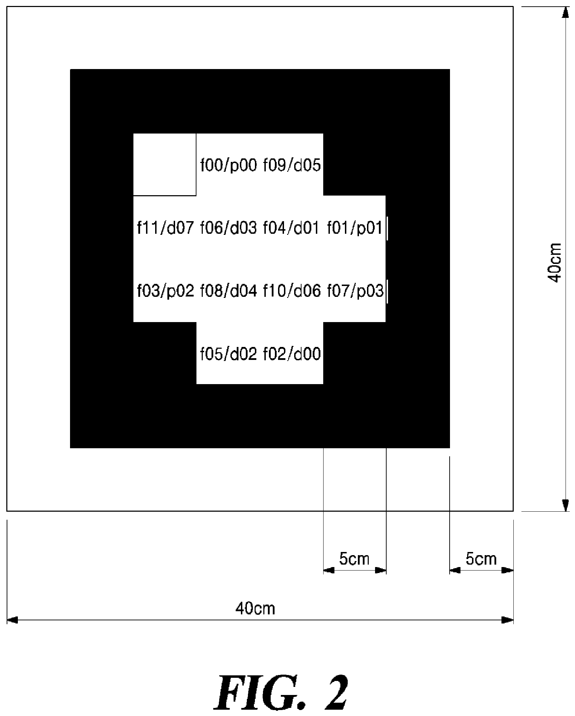

FIG. 2 is a schematic diagram of the coded marker.

Referring to FIG. 2, a coded marker in the form of a square with a black and white binary pattern is shown. This is for high contrast, simple geometry, and ease of information encoding.

The coded marker contains encoded information inside a square including 6x6 grids on a white background having a size of 40cm x 40cm for easy identification. Borders of a 6x6 square are filled with black, and information is encoded in black and white binary patterns in internal 4x4 grids. In a square consisting of 4x4 grids inside, the grids corresponding to four corners are used for orientation bits, and the other grids are used for eight data bits and four parity bits.

The orientation bits are used to determine an orientation of the coded marker, only the grid corresponding to an upper left corner has a value of 1, and the others have a value of 0.

The data bits are used to identify the ID of the coded marker, and may express a total of 255 ID values. Values 0 through 250 are used only once within a specific parking facility, and values 251 through 255 may be used repeatedly to allow a required coverage in a large parking facility.

The parity bits are used for error checking.

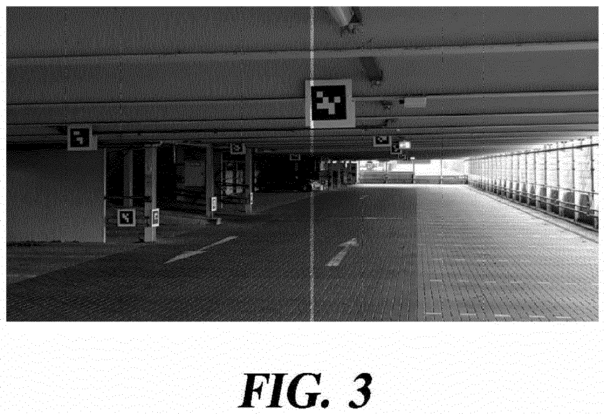

Information on positions at which coded markers are installed in the parking facility must be correctly input to a high definition map managed by the parking facility control center. The coded marker is preferably installed on a flat surface for detection and recognition. An example showing the coded markers installed in the parking facility is illustrated in FIG. 3.

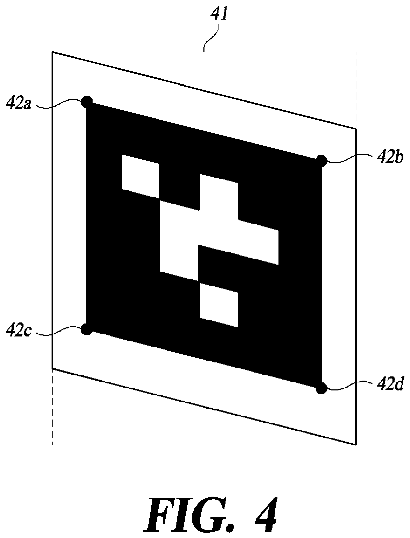

FIG. 4 is an exemplary diagram illustrating the bounding box and corner points of the coded marker detected in an image according to an embodiment of the present disclosure.

Coded markers included in images obtained by photographing front, left, right, and rear sides of the vehicle acquired from the plurality of cameras 20a, 20b, 20c, and 20d may appear in various poses (for example, positions and orientations) depending on the installed location in the parking facility, and may appear in various scales and modified forms depending on a distance from the vehicle, and the like. Referring to FIG. 4, the coded marker in the image may have a non-rectangular form, and a bounding box 41 and corner points 42a, 42b, 42c, and 42d which are results of coded marker detection in the marker recognition unit 100 are illustrated. That is, the bounding box 41 is a box including a coded marker with a white background, and the corner points 42a, 42b, 42c, and 42d are respective corners of the 6x6 square.

The detected bounding box information may be used for various purposes. In particular, the bounding box has a meaning of a region of interest (ROI) in which the coded marker exists in the image. Since an entire shape of the coded marker is contained within the area where the bounding box is located in the image, tasks such as classification and tracking may be performed using the image inside the bounding box.

The detected corner point information is utilized for decoding for identification of the coded marker ID. Since the detected corner point information includes the coordinates of each corner of a 6x6 square, and corner points of an actual coded marker installed in the parking facility correspond to the respective corners of the square, a homography matrix may be obtained using this, and the image may be warped on a plane using the homography matrix and converted into a normalized coded marker image. The converted coded marker image is easy to decode and this can improve vehicle localization performance in AVPS.

Further, each corner point is assigned a corresponding number based on its position. The number may be determined depending on the training data of the deep learning network. For example, when the deep learning network is trained using training data configured with number 1 assigned to an upper left end, number 2 assigned to an upper right end, number 3 assigned to a lower right end, and number 4 assigned to a lower left end, coordinates of the corner point of the corresponding number in the corresponding channel of the feature map output from a corner point head network, which will be described later, may be obtained. Further, the orientation of the coded marker may be recognized using the number assigned to each corner point. For example, when the corner point with number 1 is the upper left end, this indicates a position with a value of 1 among four orientation bits of the coded marker. Using this, the orientation of the coded marker may be determined.

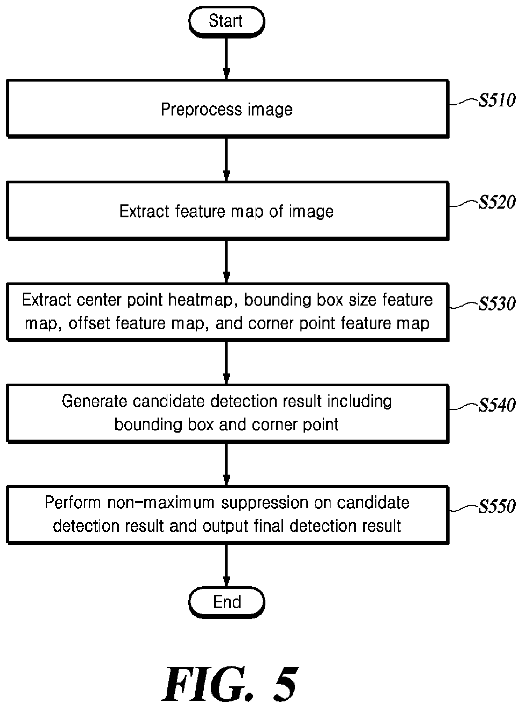

A method of detecting the AVPS marker according to an embodiment of the present disclosure will be described with reference to FIGS. 5 to 10.

The marker recognition unit 100 receives images from the plurality of cameras 20a, 20b, 20c, and 20d and performs preprocessing on the images (S510). This is intended to make the received images suitable for input to a deep learning network for detection of the coded marker (hereinafter referred to as a 'deep learning network'), which will be described later. To this end, cropping, resizing, normalization, and/or standardization may be performed on the received image.

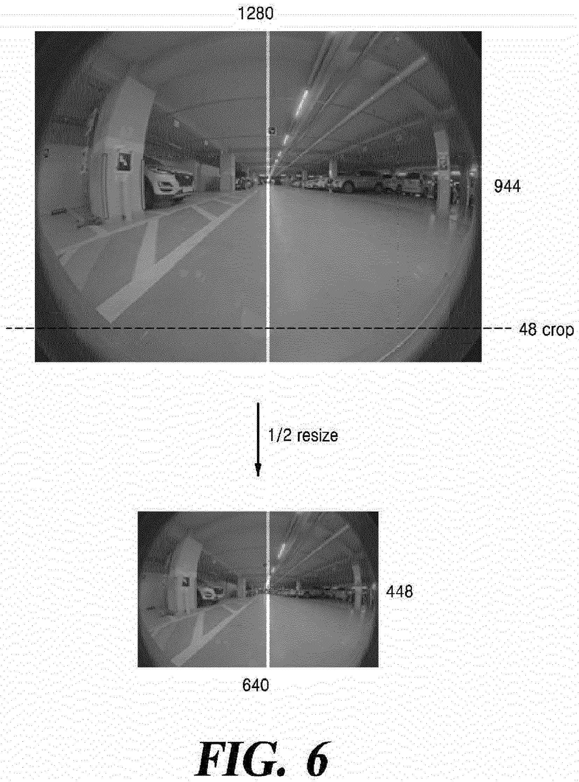

First, a size of the received image is adjusted. In a training process of the deep learning network, a size of the input image is determined, and the size of the received image is adjusted to the determined size. For example, when the size of the input image is determined to 640x448, the size of the received image may be adjusted to a multiple of 640x448 to minimize distortion. In this case, resizing may be performed after cropping a lower part of the received image corresponding to a garnish and a bottom surface of the vehicle and adjusting magnification. Referring to FIG. 6, a received image with 1280x944 size and an image adjusted to a size of 640x448 are illustrated.

Normalization and standardization may be performed on the resized image. The normalization is a process of converting each pixel value of the image to have a value between 0 and 1, and may be performed using Equation 1, but is not limited thereto. The standardization is a process of converting the pixel values of the image into a standard distribution with a mean of 0 and a standard deviation of 1, and may be performed using Equation 2.

【Equation 1】

$$x_{normalized} = \frac{x - x_{min}}{x_{max} - x_{min}}$$

In Equation 1, $x_{normalized}$ denotes a normalized pixel value, x denotes an unnormalized pixel value, $x_{min}$ denotes a minimum value among the pixel values, and $x_{max}$ denotes a maximum value among the pixel values.

【Equation 2】

$$x_{standard} = \frac{x - \bar{x}_i}{\sigma_i}$$

In Equation 2, $x_{standard}$ is a standardized pixel value, x is an unnormalized pixel value, $\bar{x}_i$ is an average of the pixel values, and $\sigma_i$ is a standard deviation of the pixel values.

In this case, the average and the standard deviation are determined depending on the training data in the deep learning network training process.

The marker recognition unit 100 inputs the preprocessed image to the deep learning network to extract a center point heatmap of the coded marker, a first feature map for a width and height of the bounding box, a second feature map for an offset for adjusting a position of the center point, and a third feature map for the corner points of the coded marker.

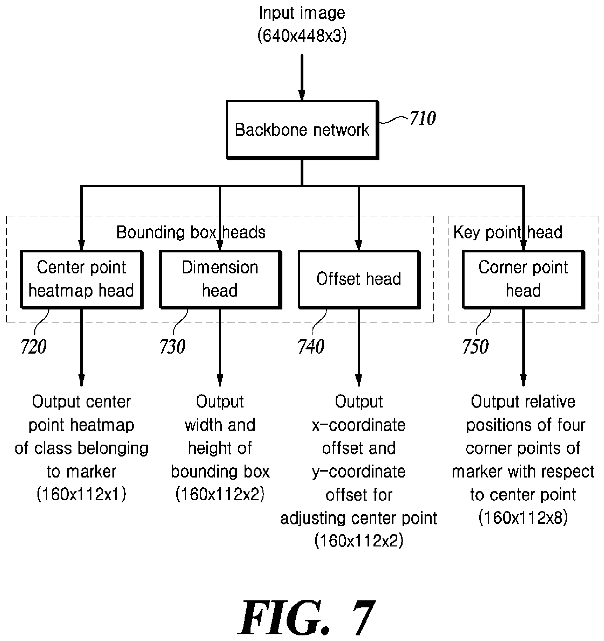

The deep learning network for detecting the coded marker is trained through multi-task learning and used. Referring to FIG. 7, the deep learning network may consist of one backbone network and four head networks.

The marker recognition unit 100 extracts a feature map of the preprocessed image through the backbone network 710 (S520). The backbone network 710 includes a CNN (convolutional neural network) including several convolutional layers, activation functions, skip connections, and the like.

For example, the backbone network of the present disclosure may be configured by combining an upsampling technique in DLA (Deep Layer Aggregation) with MobileNet V2, but the present disclosure is not limited thereto. MobileNet V2 is a lightweight network characterized by using an inverted residual block structure. The inverse residual block has an opposite structure to a residual block of the related art and has an effect of reduction in amounts of computation and memory usage. DLA is a technique for improving the performance of a deep learning model by iterative and hierarchical deep aggregation which iteratively and hierarchically merging the feature hierarchy.

The marker recognition unit 100 uses a plurality of head networks 720, 730, 740, and 750 to receive the feature map of the image, and extracts the heatmap of the center point of the coded marker, the first feature map, the second feature map, and the third feature map for the corner point of the coded marker (S530). As illustrated in FIG. 7, the center point heatmap, the first feature map, the second feature map, and the third feature map for the corner point of the coded marker have the same width and height, but are different in the number of channels. Each head network may be implemented using a head structure of a keypoint-based object detection model (for example, CenterNet).

A center point heatmap head 720 is a head network trained to output a center point heatmap of a class belonging to the coded marker. Here, the center point refers to a center point of the bounding box for detecting the coded marker. The center point heatmap has one channel.

A dimension head 730 is a head network trained to output a first feature map for the width and height of the bounding box corresponding to the center point. The first feature map has two channels for each of the width and the height.

An offset head 740 is a head network trained to output the second feature map for the offset for adjusting the center point according to a scale of the input image. The second feature map has two channels, one for x-coordinate offset and one for y-coordinate offset.

A corner point head 750 is a head network trained to output the third feature map for a relative position of the corner point of the coded marker with respect to the center point. The third feature map has eight channels for each of x-coordinates and y-coordinates of the four corner points.

The marker recognition unit 100 generates a candidate detection information including the bounding box and corner points on the basis of the center point heatmap, the first feature map, the second feature map, and the third feature map (S540).

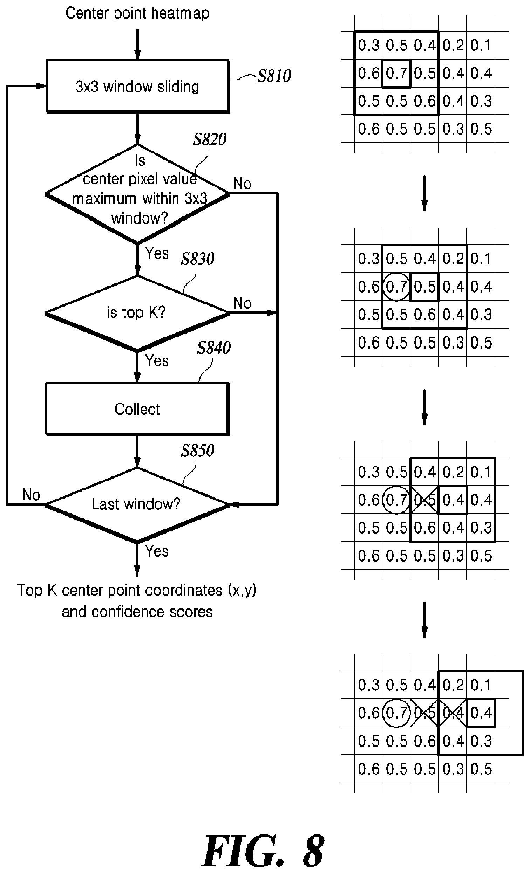

First, a preset number of coordinates and confidence scores are extracted in order of highest confidence score among coordinates with a peak pixel value from the center point heatmap. Here, a coordinate with a peak pixel value refers to a coordinate having a pixel value equal to or greater than pixel vaules of eight adjacent coordintes. That is, since the center point heatmap is a feature map made up of confidence score for the center point of the coded marker, top K x-coordinates and y-coordinates with a high confidence score among all coordinates with the maximum pixel value within a surrounding 3x3 window, and the confidence score are output. Here, K is a preset number (for example, 100). A process of extracting K center points from the center point heatmap will be described in detail with reference to FIG. 8.

3x3 window sliding is performed on the center point heatmap (S810).

A determination is made as to whether the pixel value located at a center of the 3x3 window is the maximum within the 3x3 window (S820).

When the pixel value is the maximum, a determination is made as to whether the pixel value is within the top K in a descending order of confidence score (S830), and when the pixel value is not the maximum, the process proceeds to process S850.

When the pixel value is within the top K, the corresponding pixel is collected. That is, the pixel is included in top K center points (S840). When the pixel value is not within the top K, the process proceeds to process S850.

A determination is made as to whether the window is a last window (S850), and when the last window has been reached, the coordinates and confidence score for the top K collected center points are output.

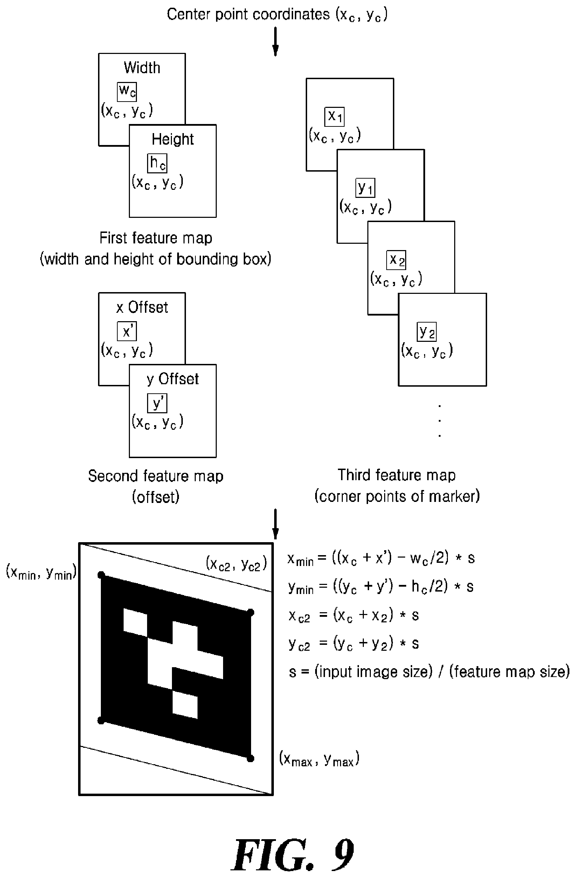

The first feature map, the second feature map, and the third feature map are analyzed on the basis of coordinates of the top K center points extracted from the center point heatmap. A process of extracting the width and height of the bounding box, the offset, and the corner point information of the coded marker on the basis of the extracted center point information will be described with reference to FIG. 9.

Since the first feature map represents width and height values of the bounding box with each pixel as the center point, width and height values corresponding to the coordinates of the top K center points extracted from the center point heatmap are extracted and matched with the corresponding top K center points.

Since the second feature map represents an offset value of the x coordinate and an offset value of the y coordinate for the center point of the coded marker, the offset value of the x coordinate and the offset value of the y coordinate corresponding to the coordinates of the top K center points extracted from the center point heatmap are extracted and matched with the corresponding top K center point.

Since the third feature map represents the relative x and y coordinate values of the corner points with respect to the center point of the coded marker, the relative x and y coordinate values of the corner points corresponding to the top K center point coordinates extracted from the center point heatmap are extracted and matched with the corresponding top K center point.

Meanwhile, since coordinate values of the top K center points, width/height values of the corresponding bounding boxes, the corresponding offset values, and relative coordinate values of the the corner points are values with reference to the size of the feature map of the input image, the values must be multiplied by a scaling factor s. Here, the scaling factor is a ratio between the size of the input image and the size of the feature map extracted through the backbone network. That is, position information of the bounding box and the corner points in the input image may be obtained using the scaling factor.

The marker recognition unit 100 outputs final detection information by performing modified non-maximum suppression on the candidate detection information (S550).

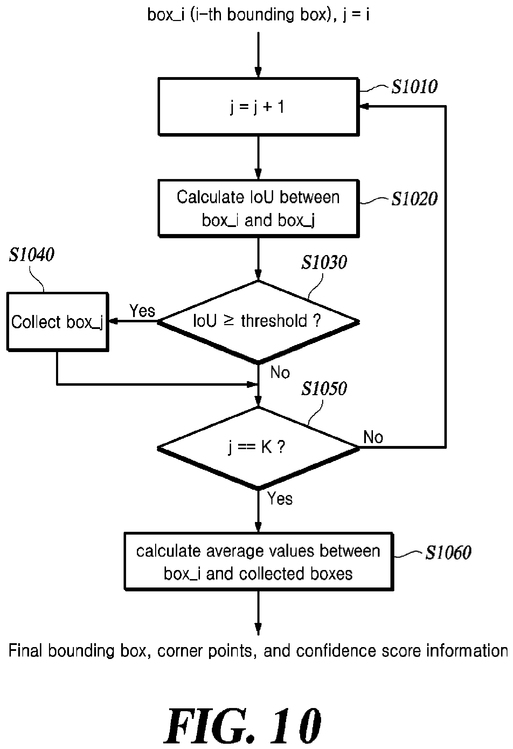

FIG. 10 shows a process of performing the modified non-maximum suppression on the candidate detection information according to an embodiment of the present disclosure. Each IoU (Intersection over Union) between the bounding boxes included in the top K candidate detection information is calculated. For bounding boxes with an IoU equal to or greater than a threshold, average coordinate values of the center point, an average width value, an average height value, an average confidence score value and average coordinate values of the corner points are calculated to obtain the final detection information. That is, a method of performing the modified non-maximum suppression according to an embodiment of the present invention does not remove bounding boxes that are not maximum, but uses the average values of bounding boxes with the IoU equal to or greater than the threshold to create single detection result.

First, the top K candidate detection information may be rearranged in order of high confidence score.

An i-th bounding box is matched with each of (i+1)-th to K-th bounding boxes (S1010) and the IoU is calculated (S1020).

A determination is made as to whether the IoU is equal to or greater than a threshold (S1030).

When the IoU is equal to or greater than the threshold, a j-th bounding box is collected (S1040). This is intended to determine that the i-th bounding box and the collected j-th bounding box correspond to the same coded marker, remove duplicates, and output single detection result.

When the IoU is smaller than the threshold, a determination is made as to whether the above-described process has been performed up to the K-th bounding box (S1050). When the above-described process is not performed up to the K-th bounding box, the process proceeds to process S1010, and when the above-described process is performed up to the K-th bounding box, average values between the i-th bounding box and the collected bounding boxes are calculated to obtain single detection result (S1060), and the i-th bounding box and the collected bounding boxes are removed from the candidate detection information.

Processes S1010 to S1060 are repeatedly performed until there is no bounding box included in the candidate detection information. This makes it possible to obtain a final coded marker detection result.

Each component of the device or method according to embodiments of the present disclosure may be implemented in hardware, software, or a combination of the hardware and software. In addition, the function of each component may be implemented as software, and a microprocessor may be implemented to execute the software function corresponding to each component.

Various implementations of the systems and techniques described herein may include digital electronic circuits, integrated circuits, field programmable gate arrays (FPGAs), application specific integrated circuits (ASICs), computer hardware, firmware, software, and/or a combination thereof. These various implementations may include implementations with one or more computer programs executable on a programmable system. The programmable system includes at least one programmable processor (which may be a special purpose processor or a general purpose processor) combined to receive and transmit data and instructions from and to a storage system, at least one input device, and at least one output device. The computer programs (also known as programs, software, software applications, or codes) include instructions for a programmable processor and are stored in a "computer-readable storage medium".

The computer-readable storage medium includes all kinds of storage devices that store data readable by a computer system. The computer-readable storage medium may include a non-volatile or non-transitory medium such as a ROM, CD-ROM, magnetic tape, floppy disk, memory card, hard disk, magneto-optical disk, and storage device, and also further include a transitory medium such as a data transmission medium. Moreover, the computer-readable storage medium may be distributed in computer systems connected through a network, and computer-readable codes may be stored and executed in a distributed manner.

In the flowcharts in the present specification, it is described that each process sequentially occurs, but this is merely an example of the technology of an embodiment of the present disclosure. In other words, a person having ordinary skill in the art to which an embodiment of the present disclosure pertains may make various modifications and variations by changing the orders described in the flowcharts in the present specification or by undergoing one or more of the processes in parallel within the essential characteristics of an embodiment of the present disclosure, so the flowcharts in this specification are not limited to a time-series order.

Although exemplary embodiments of the present disclosure have been described for illustrative purposes, those skilled in the art will appreciate that various modifications, additions, and substitutions are possible, without departing from the scope of the claimed invention. Therefore, exemplary embodiments of the present disclosure have been described for the sake of brevity and clarity. The scope of the technical idea of the embodiments of the present disclosure is not limited by the illustrations. Accordingly, one of ordinary skill would understand the scope of the claimed invention is not to be limited by the above explicitly described embodiments but by the claims thereof.

## Claims

1. A method of detecting a coded marker, the method comprising:

   receiving an image and preprocessing (S510) the image;
   extracting (S520) a feature map of the image through a backbone network (710);
   extracting (S530) a center point heatmap for a coded marker, a first feature map for a width and height of a bounding box, a second feature map for offsets for adjusting a center point, and a third feature map for corner points of the coded marker from the feature map using a plurality of head networks;
   generating (S540) candidate detection information comprising the bounding box and the corner points based on the center point heatmap, the first feature map, the second feature map, and the third feature map; and
   outputting (S550) final detection information by performing a modified non-maximum suppression on the candidate detection information,
   **characterized in that**

outputting the final detection information comprises:

> calculating (S1020) each IoU, Intersection over Union, between bounding boxes included in the candidate detection information;
> calculating (S1030), for bounding boxes with an IoU equal to or greater than a threshold, an average of center point coordinates, an average of width values, an average of height values, an average of confidence score values, and an average of corner point coordinates; and
> outputting (S1060) the averages as the final detection information.

2.   The method of claim 1, wherein preprocessing the image comprises performing at least one of cropping, resizing, normalization, or standardization on the image.

3.   The method of claim 1, or 2, wherein the backbone network (710) is a convolutional neural network, CNN, using an inverted residual block structure and DLA, deep layer aggregation, and is trained to extract a feature map of an input image.

4.   The method of claim 1, 2, or 3, wherein the plurality of head networks comprises a center point heatmap head (720) trained to output the center point heatmap of a class corresponding to the coded marker from the feature map, a dimension head trained to output the first feature map for the width and height of the bounding box corresponding to the center point, an offset head (740) trained to output the second feature map for the offsets for adjusting the center point, and a corner point head trained to output the third feature map for a relative position of each of the corner points with reference to the center point.

5.   The method of any one of claims 1 to 4, wherein the plurality of head networks are trained through multi-task learning.

6.   The method of ny one of claims 1 to 5, wherein generating the candidate detection information comprises:

> extracting, from the center point heatmap, coordinates and confidence scores for a preset number of center points in an order of highest confidence score among coordinates having a peak pixel value;
> extracting, from the first feature map, width and height values of the bounding box corresponding to the preset number of center points;
> extracting, from the second feature map, offset values corresponding to the preset number of center points;
> extracting, from the third feature map, corner point coordinates corresponding to the preset number of center points; and
> generating bounding box information using the center point coordinates, the width values, the height values, the offset values, and a scaling factor, and generating corner point information using the center point coordinates, the corner point coordinates, and the scaling factor.

7.   The method of claim 6, wherein the coordinates having a peak pixel value are coordinates with a pixel value equal to or greater than pixel values of eight adjacent coordinates.

8.   The method of claim 6, or 7, wherein the scaling factor is a ratio between a size of the image and a size of the feature map.

9.   An apparatus comprising one or more processors and a memory operably connected to the one or more processors, wherein:
the memory stores instructions causing the one or more processors to perform operations in response to execution of instructions by the one or more processors, and the operations comprise:

> receiving an image and preprocessing (S510) the image;
> extracting (S520) a feature map of the image through a backbone network (710);
> extracting (S530) a center point heatmap for a coded marker, a first feature map for a width and height of a bounding box, a second feature map for offsets for adjusting a center point, and a third feature map for corner points of the coded marker from the feature map using a plurality of head networks;
> generating (S540) candidate detection information comprising the bounding box and the corner points based on the center point heatmap, the first feature map, the second feature map, and the third feature map; and
> outputting (S550) final detection information by performing modified non-maximum suppression on the candidate detection information,

**characterized in that**
outputting the final detection information comprises:

calculating (S1020) each IoU, Intersection over Union, between bounding boxes included in the candidate detection information;
calculating (S1030), for bounding boxes with an IoU equal to or greater than a threshold, an average of center point coordinates, an average of width values, an average of height values, an average of confidence score values, and an average of corner point coordinates; and
outputting (S1060) the averages as the final detection information.

**Patentansprüche**

1. Verfahren zum Erkennen eines codierten Markers, das Verfahren aufweisend:

Empfangen eines Bildes und Vorverarbeiten (S510) des Bildes;
Extrahieren (S520) einer Merkmalskarte des Bildes durch ein Rückgratnetzwerk (710);
Extrahieren (S530) einer Mittelpunktwärmekarte für einen codierten Marker, einer ersten Merkmalskarte für eine Breite und Höhe eines Begrenzungsrahmens, einer zweiten Merkmalskarte für Versätze zum Anpassen eines Mittelpunkts, und einer dritten Merkmalskarte für Eckpunkte des codierten Markers aus der Merkmalskarte unter Verwendung mehrerer Kopfnetzwerke;
Erzeugen (S540) von in Frage kommenden Erkennungsinformationen, aufweisend den Begrenzungsrahmen und die Eckpunkte, basierend auf der Mittelpunktwärmekarte, der ersten Merkmalskarte, der zweiten Merkmalskarte und der dritten Merkmalskarte; und
Ausgeben (S550) von finalen Erkennungsinformationen durch Durchführen einer modifizierten Nicht-Maximum-Unterdrückung an den in Frage kommenden Erkennungsinformationen,
**dadurch gekennzeichnet, dass**
das Ausgeben der finalen Erkennungsinformationen aufweist:

Berechnen (S1020) jeder IoU, Intersection over Union, zwischen Begrenzungsrahmen, die in den in Frage kommenden Erkennungsinformationen eingeschlossen sind;
Berechnen (S1030), für Begrenzungsrahmen mit einem IoU gleich oder größer als einem Schwellenwert, eines Durchschnittswerts von Mittelpunktkoordinaten, eines Durchschnittswerts von Breitenwerten, eines Durchschnittswerts von Höhenwerten, eines Durchschnittswerts von Konfidenzbewertungswerten und eines Durchschnittswerts von Eckpunktkoordinaten; und
Ausgeben (S1060) der Durchschnittswerte als die finalen Erkennungsinformationen.

2. Verfahren nach Anspruch 1, wobei das Vorverarbeiten des Bildes das Durchführen von mindestens einem von Zuschneiden, Größenänderung, Normalisierung oder Standardisierung an dem Bild aufweist.

3. Verfahren nach Anspruch 1 oder 2, wobei das Rückgratnetzwerk (710) ein neuronales Faltungsnetz, CNN, ist, das eine invertierte Restblockstruktur und Deep Layer Aggregation, DLA, verwendet und darauf trainiert ist, eine Merkmalskarte eines Eingabebildes zu extrahieren.

4. Verfahren nach Anspruch 1, 2 oder 3, wobei die mehreren Kopfnetzwerke einen Mittelpunktwärmekartenkopf (720), der darauf trainiert ist, die Mittelpunktwärmekarte einer Klasse auszugeben, die dem codierten Marker aus der Merkmalskarte entspricht, einen Dimensionskopf, der darauf trainiert ist, die erste Merkmalskarte für die Breite und Höhe des Begrenzungsrahmens auszugeben, die dem Mittelpunkt entspricht, einen Versatzkopf (740), der darauf trainiert ist, die zweite Merkmalskarte für die Versätze zum Anpassen des Mittelpunkts auszugeben, und einen Eckpunktkopf, der darauf trainiert ist, die dritte Merkmalskarte für eine relative Position jedes der Eckpunkte in Bezug auf den Mittelpunkt auszugeben, aufweisen.

5. Verfahren nach einem der Ansprüche 1 bis 4, wobei die mehreren Kopfnetzwerke durch Multi-Task-Lernen trainiert werden.

6. Verfahren nach einem der Ansprüche 1 bis 5, wobei das Erzeugen der in Frage kommenden Erkennungsinformationen aufweist:

Extrahieren, aus der Mittelpunktwärmekarte, von Koordinaten und Konfidenzbewertungen für eine voreingestellte Anzahl von Mittelpunkten in einer Reihenfolge einer höchsten Konfidenzbewertung unter Koordinaten, die einen Spitzenpixelwert aufweisen;

Extrahieren, aus der ersten Merkmalskarte, von Breiten- und Höhenwerten des Begrenzungsrahmens, die der voreingestellten Anzahl von Mittelpunkten entsprechen;

Extrahieren, aus der zweiten Merkmalskarte, von Versatzwerten, die der voreingestellten Anzahl von Mittelpunkten entsprechen;

Extrahieren, aus der dritten Merkmalskarte, von Eckpunktkoordinaten, die der voreingestellten Anzahl von Mittelpunkten entsprechen; und

Erzeugen von Begrenzungsrahmeninformationen unter Verwendung der Mittelpunktkoordinaten, der Breitenwerte, der Höhenwerte, der Versatzwerte und eines Skalierungsfaktors, und Erzeugen von Eckpunktinformationen unter Verwendung der Mittelpunktkoordinaten, der Eckpunktkoordinaten und des Skalierungsfaktors.

7. Verfahren nach Anspruch 6, wobei die Koordinaten, die einen Spitzenpixelwert aufweisen, Koordinaten mit einem Pixelwert gleich oder größer als Pixelwerte von acht benachbarten Koordinaten sind.

8. Verfahren nach Anspruch 6 oder 7, wobei der Skalierungsfaktor ein Verhältnis zwischen einer Größe des Bildes und einer Größe der Merkmalskarte ist.

9. Vorrichtung, aufweisend einen oder mehrere Prozessoren und einen Speicher, der mit dem einen oder den mehreren Prozessoren wirkverbunden ist, wobei:

der Speicher Anweisungen speichert, die den einen oder die mehreren Prozessoren veranlassen, Operationen als Reaktion auf eine Ausführung von Anweisungen durch den einen oder die mehreren Prozessoren durchzuführen, und die Operationen aufweisen:

Empfangen eines Bildes und Vorverarbeiten (S510) des Bildes;

Extrahieren (S520) einer Merkmalskarte des Bildes durch ein Rückgratnetzwerk (710);

Extrahieren (S530) einer Mittelpunktwärmekarte für einen codierten Marker, einer ersten Merkmalskarte für eine Breite und Höhe eines Begrenzungsrahmens, einer zweiten Merkmalskarte für Versätze zum Anpassen eines Mittelpunkts, und einer dritten Merkmalskarte für Eckpunkte des codierten Markers aus der Merkmalskarte unter Verwendung mehrerer Kopfnetzwerke;

Erzeugen (S540) von in Frage kommenden Erkennungsinformationen, aufweisend den Begrenzungsrahmen und die Eckpunkte, basierend auf der Mittelpunktwärmekarte, der ersten Merkmalskarte, der zweiten Merkmalskarte und der dritten Merkmalskarte; und

Ausgeben (S550) von finalen Erkennungsinformationen durch Durchführen modifizierter Nicht-Maximum-Unterdrückung an den in Frage kommenden Erkennungsinformationen,

**dadurch gekennzeichnet, dass**

das Ausgeben der finalen Erkennungsinformationen aufweist:

Berechnen (S1020) jeder IoU, Intersection over Union, zwischen Begrenzungsrahmen, die in den in Frage kommenden Erkennungsinformationen eingeschlossen sind;

Berechnen (S1030), für Begrenzungsrahmen mit einem IoU gleich oder größer als einem Schwellenwert, eines Durchschnittswerts von Mittelpunktkoordinaten, eines Durchschnittswerts von Breitenwerten, eines Durchschnittswerts von Höhenwerten, eines Durchschnittswerts von Konfidenzbewertungswerten und eines Durchschnittswerts von Eckpunktkoordinaten; und

Ausgeben (S1060) der Durchschnittswerte als die finalen Erkennungsinformationen.

## Revendications

1. Procédé permettant de détecter un marqueur codé, le procédé comprenant :

la réception d'une image et le prétraitement (S510) de l'image ;

l'extraction (S520) d'une carte de caractéristiques de l'image par le biais d'un réseau dorsal (710) ;

l'extraction (S530) d'une carte de densité de points centraux pour un marqueur codé, d'une première carte de caractéristiques pour une largeur et une hauteur d'une zone de délimitation, d'une deuxième carte de caractéristiques pour des décalages afin d'ajuster un point central, et d'une troisième carte de caractéristiques pour des points d'angle du marqueur codé à partir de la carte de caractéristiques à l'aide d'une pluralité de réseaux de tête ;

la génération (S540) d'informations de détection candidates comprenant la zone de délimitation et les points d'angle sur la base de la carte de densité de points centraux, de la première carte de caractéristiques, de la deuxième carte de caractéristiques, et de la troisième carte de caractéristiques ; et

la délivrance en sortie (S550) d'informations de détection finales en réalisant une suppression non maximale modifiée sur les informations de détection candidates,

**caractérisé en ce que**

la délivrance en sortie des informations de détection finales comprend :

le calcul (S1020) de chaque intersection sur union, IoU, entre des zones de délimitation incluses dans les informations de détection candidates ;

le calcul (S1030), pour des zones de délimitation dont une IoU est égale ou supérieure à un seuil, d'une moyenne de coordonnées de points centraux, d'une moyenne de valeurs de largeur, d'une moyenne de valeurs de hauteur, d'une moyenne de valeurs de score de confiance et d'une moyenne de coordonnées de points d'angle ; et

la délivrance en sortie (S1060) des moyennes en tant qu'informations de détection finales.

2. Procédé selon la revendication 1, dans lequel le prétraitement de l'image comprend la réalisation d'au moins l'un parmi un recadrage, un redimensionnement, une normalisation, ou une standardisation sur l'image.

3. Procédé selon la revendication 1 ou 2, dans lequel le réseau dorsal (710) est un réseau neuronal convolutif, CNN, utilisant une structure de blocs résiduels inversés et une agrégation de couches profondes, DLA, et est entraîné pour extraire une carte de caractéristiques d'une image d'entrée.

4. Procédé selon la revendication 1, 2 ou 3, dans lequel la pluralité de réseaux de tête comprend une tête de carte de densité de points centraux (720) entraînée pour délivrer en sortie la carte de densité de points centraux d'une classe correspondant au marqueur codé à partir de la carte de caractéristiques, une tête de dimension entraînée pour délivrer en sortie la première carte de caractéristiques pour la largeur et la hauteur de la zone de délimitation correspondant au point central, une tête de décalage (740) entraînée pour délivrer en sortie la deuxième carte de caractéristiques pour les décalages afin d'ajuster le point central, et une tête de point d'angle entraînée pour délivrer en sortie la troisième carte de caractéristiques pour une position relative de chacun des points d'angle en référence au point central.

5. Procédé selon l'une quelconque des revendications 1 à 4, dans lequel la pluralité de réseaux de tête sont entraînés par le biais d'un apprentissage multitâche.

6. Procédé selon l'une quelconque des revendications 1 à 5, dans lequel la génération des informations de détection candidates comprend :

l'extraction, de la carte de densité de points centraux, de coordonnées et de scores de confiance pour un nombre prédéfini de points centraux dans un ordre de score de confiance le plus élevé parmi des coordonnées ayant une valeur de pixel maximale ;

l'extraction, à partir de la première carte de caractéristiques, de valeurs de largeur et de hauteur de la zone de délimitation correspondant au nombre prédéfini de points centraux ;

l'extraction, à partir de la deuxième carte de caractéristiques, de valeurs de décalage correspondant au nombre prédéfini de points centraux ;

l'extraction, à partir de la troisième carte de caractéristiques, de coordonnées de points d'angle correspondant au nombre prédéfini de points centraux ; et

la génération d'informations de zone de délimitation à l'aide des coordonnées de points centraux, des valeurs de largeur, des valeurs de hauteur, des valeurs de décalage et d'un facteur de mise à l'échelle, et la génération d'informations de points d'angle à l'aide des coordonnées de points centraux, des coordonnées de points d'angle et du facteur de mise à l'échelle.

7. Procédé selon la revendication 6, dans lequel les coordonnées ayant une valeur de pixel de maximale sont des coordonnées avec une valeur de pixel égale ou supérieure à des valeurs de pixel de huit coordonnées adjacentes.

8. Procédé selon la revendication 6 ou 7, dans lequel le facteur de mise à l'échelle est un rapport entre une taille de l'image et une taille de la carte de caractéristiques.

9. Appareil comprenant un ou plusieurs processeurs et une mémoire connectée de manière opérationnelle au ou aux processeurs, dans lequel :
la mémoire stocke des instructions amenant le ou les processeurs à réaliser des opérations en réponse à l'exécution d'instructions par le ou les processeurs, et les opérations comprennent :

la réception d'une image et le prétraitement (S510) de l'image ;
l'extraction (S520) d'une carte de caractéristiques de l'image par le biais d'un réseau dorsal (710) ;
l'extraction (S530) d'une carte de densité de points centraux pour un marqueur codé, d'une première carte de caractéristiques pour une largeur et une hauteur d'une zone de délimitation, d'une deuxième carte de caractéristiques pour des décalages afin d'ajuster un point central, et d'une troisième carte de caractéristiques pour des points d'angle du marqueur codé à partir de la carte de caractéristiques à l'aide d'une pluralité de réseaux de tête ;
la génération (S540) d'informations de détection candidates comprenant la zone de délimitation et les points d'angle sur la base de la carte de densité de points centraux, de la première carte de caractéristiques, de la deuxième carte de caractéristiques, et de la troisième carte de caractéristiques ; et
la délivrance en sortie (S550) d'informations de détection finales en réalisant une suppression non maximale modifiée sur les informations de détection candidates,
**caractérisé en ce que**
la délivrance en sortie des informations de détection finales comprend :

le calcul (S1020) de chaque intersection sur union, IoU, entre des zones de délimitation incluses dans les informations de détection candidates ;
le calcul (S1030), pour des zones de délimitation dont une IoU est égale ou supérieure à un seuil, d'une moyenne de coordonnées de points centraux, d'une moyenne de valeurs de largeur, d'une moyenne de valeurs de hauteur, d'une moyenne de valeurs de score de confiance et d'une moyenne de coordonnées de points d'angle ; et
la délivrance en sortie (S1060) des moyennes en tant qu'informations de détection finales.

**FIG. 1**

f00/p00 f09/d05

f11/d07 f06/d03 f04/d01 f01/p01

f03/p02 f08/d04 f10/d06 f07/p03

f05/d02 f02/d00

40cm

40cm

5cm

5cm

## FIG. 2

**FIG. 3**

**FIG. 4**

```
                    ┌─────────────┐
                    │    Start    │
                    └─────────────┘
                           │
                           ▼
         ┌──────────────────────────────────────┐
         │         Preprocess image             │────S510
         └──────────────────────────────────────┘
                           │
                           ▼
         ┌──────────────────────────────────────┐
         │        Extract feature map of image  │────S520
         └──────────────────────────────────────┘
                           │
                           ▼
         ┌──────────────────────────────────────┐
         │ Extract center point heatmap,        │
         │ bounding box size feature            │────S530
         │ map, offset feature map, and corner  │
         │ point feature map                    │
         └──────────────────────────────────────┘
                           │
                           ▼
         ┌──────────────────────────────────────┐
         │ Generate candidate detection result  │
         │ including bounding box and corner    │────S540
         │ point                                │
         └──────────────────────────────────────┘
                           │
                           ▼
         ┌──────────────────────────────────────┐
         │ Perform non-maximum suppression on   │
         │ candidate detection result and       │────S550
         │ output final detection result        │
         └──────────────────────────────────────┘
                           │
                           ▼
                    ┌─────────────┐
                    │     End     │
                    └─────────────┘
```

# FIG. 5

1280

944

48 crop

1/2 resize

448

640

**FIG. 6**

Input image
(640x448x3)

Backbone network ⌐710

Bounding box heads

| Center point heatmap head | Dimension head | Offset head |
|---|---|---|

Key point head

Corner point head

720        730        740        750

Output center point heatmap of class belonging to marker (160x112x1)

Output width and height of bounding box (160x112x2)

Output x-coordinate offset and y-coordinate offset for adjusting center point (160x112x2)

Output relative positions of four corner points of marker with respect to center point (160x112x8)

# FIG. 7

**FIG. 8**

Center point coordinates $(x_c, y_c)$

Width

$\boxed{w_c}$

$(x_c, y_c)$

Height

$\boxed{h_c}$

$(x_c, y_c)$

First feature map
(width and height of bounding box)

$\boxed{x_1}$

$(x_c, y_c)$

$\boxed{y_1}$

$(x_c, y_c)$

$\boxed{x_2}$

$(x_c, y_c)$

$\boxed{y_2}$

$(x_c, y_c)$

x Offset

$\boxed{x'}$

$(x_c, y_c)$

y Offset

$\boxed{y'}$

$(x_c, y_c)$

Second feature map
(offset)

Third feature map
(corner points of marker)

$(x_{min}, y_{min})$

$(x_{c2}, y_{c2})$

$(x_{max}, y_{max})$

$x_{min} = ((x_c + x') - w_c/2) * s$

$y_{min} = ((y_c + y') - h_c/2) * s$

$x_{c2} = (x_c + x_2) * s$

$y_{c2} = (y_c + y_2) * s$

$s = (\text{input image size}) / (\text{feature map size})$

## FIG. 9

box_i (i-th bounding box), j = i

j = j + 1 — *S1010*

Calculate IoU between box_i and box_j — *S1020*

*S1040*

Collect box_j

*S1030*

Yes ← IoU ≥ threshold ?

No

*S1050*

j == K ? — No

Yes

calculate average values between box_i and collected boxes — *S1060*

Final bounding box, corner points, and confidence score information

# FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230127919

**Non-patent literature cited in the description**

- **WEITONG WAN et al.** Two-dimensional barcode positioning algorithm of lightweight CenterNet network. *JOURNAL OF ELECTRONIC MEASUREMENT AND INSTRUMENTATION*, 01 May 2022, 1-8

- Objects as Points. **XINGYI ZHOU et al.** ARXIV.ORG. CORNELL UNIVERSITY LIBRARY, 16 April 2019